# EUROPEAN PATENT SPECIFICATION

(11) **EP 2 416 509 B1**
(45) Date of publication and mention of the grant of the patent: **11.09.2013**
(21) Application number: 11175139.2
(22) Date of filing: 25.07.2011
(51) Int. Cl.: H04J 3/16

(54) **Method for multiplexing and demultiplexing digital data from a plurality of sources with an assigned nominal capacity.**
Verfahren zum Multiplexen und Demultiplexen von digitalen Daten aus mehreren Quellen mit zugewiesenen Nennkapazität
Procédé de multiplexage et démultiplexage de données numériques provenant de plusieurs sources avec capacité nominale assignée

(30) Priority: 03.08.2010 IT MI20101466
(43) Date of publication of application: 08.02.2012
(73) Proprietor: SIAE Microelettronica S.p.A., 20093 Cologno Monzese (MI) (IT)
(72) Inventor: Cucchi, Daniele, 20093 COLOGNO MONZESE (IT); Pulzoni, Roberto, 20093 COLOGNO MONZESE (IT)
(74) Representative: Raimondi, Margherita

(56) References cited:
- US-A- 3 982 074

## Description

The present invention relates to a method for multiplexing and demultiplexing digital data from a plurality of sources for transmission thereof on at least one transmission channel with an assigned nominal capacity.

It is known in the technical sector relating to the digital transmission of data using any means, such as radio relays, that said transmission is organized using three reference parameters, i.e.:
- one or more TX clients (referred to below also as "TX source") which sends the data flows to be transmitted;
- at least one transmission channel (= server) which receives the flows from the source(s) and transmits them to the destination, assigning them correctly;
- and one or more recipients, referred to below also as "RX clients".

In this connection it is also known that there exists the need to transmit information in the form of signals from several sources, the number of which may also be variable over time, and that, generally, said signal sources, in addition to being organized internally in accordance with predetermined transmission priorities, which are defined a priori by the client, may also have different characteristics as regards:
- the respective transmission speed (bit rate) which, in addition to being different from source to source, may in turn may also be variable over time;
- the types of communication protocols used which may be different from each other.

In order to manage the codes for transmission of the signals from the different TX sources, multiplexing and demultiplexing methods are also known where, during data transmission - in particular but not exclusively via radio relays - flows from different TX sources may be combined; said methods are essentially based on the provision of tables which must contain the information useful for identifying each signal of each source contained within the multiplexed flow and must therefore be available both during transmission (multiplexing) and during reception (demultiplexing), being therefore extremely complex from the point of view of circuit design.

These methods also have the further drawbacks consisting in: the need for the transmission channel to know the characteristics of the signal to be transmitted and the need to provide a - in some cases large - number of tables which can be accessed depending on the variability of combinations of possible transmission capacities. An example of this known art is described for example in W02009/010972 and in US 3,982,074.

The technical problem which is posed, therefore, is to provide a method for multiplexing and demultiplexing digital signals with different characteristics supplied by different TX sources which may also be of a variable number over time, and to be transmitted on one or more transmission channels with an assigned total capacity, also variable over time, so as to:
- perform transmission, automatically, without having to know the content and structure of data packets supplied by the various sources, namely in a manner entirely independent of the type of data protocol used by the TX sources;
- perform said transmission so that:
- all the clients are treated equally as regards the latency time, i.e. the time which lapses between the moment when a signal is delivered by the TX source to the transmission system and the moment when the same signal is delivered by the transmission system to the RX client;
- the total latency time, formed by the sum of the latency times of all the clients, is minimized;
- the variations over time of said latency time are also minimized;
- demultiplexing during reception, so as to be able to reconstruct the individual flows of the single original TX sources for forwarding them to the corresponding RX clients, occurs automatically based on a reduced amount of information necessary for this purpose.

In connection with this problem it is also required that this method should result in a reduction, compared to the prior art, and in particular the table method, of the circuits required for physical implementation of the method, reducing the corresponding production costs.

These results are achieved according to the present invention by a method for multiplexing and demultiplexing digital data from a plurality of sources with an assigned nominal capacity, according to the characteristic features of Claim 1.

Further details may be obtained from the following more detailed description of a non-limiting example of embodiment of the multiplexing and demultiplexing method according to the present invention provided with reference to the accompanying drawings in which:
- Figure 1:: shows a summary block diagram of an example of a transmission structure to which the method according to the present invention is applied; and
- Figure 2:: shows an example of the table of values assumed by the variables according to Example 1 of the method according to the invention; and
- Figure 3:: shows an example of the table of values assumed by the variables according to Example 2 of the method according to the invention.

Assuming firstly, for the purposes of the present description, the following definitions:
- basic unit Uj =: the basic quantity of data supplied by a same source Cᵢ expressed in bits, nibbles or bytes;
- time unit T =: a predefined time interval, the same for all the sources, during which each source Cᵢ transmits a number of basic units Uj equal to its nominal capacity cᵢ;
- time unit clock CKU =: the clock which synchronizes each time unit;
- transition clock CKT =: clock, submultiple of the time unit clock, which syncrhonizes loading of a basic unit in the transmission flow;
the method according to the present invention for multiplexing and demultiplexing data flows from a plurality "N" of sources Cᵢ, each with an assigned nominal capacity cᵢ such that the overall nominal transmission capacity CN=c₁+c₂+ ... +c_{N} of all the N sources is not greater than the nominal transmission capacity in the time unit, comprises the following steps:
- identifying the source (Cₘₐₓ) with the greater nominal capacity (cₘₐₓ); in the case of several TX sources with the same maximum capacity, one to be used as source Cₘₐₓ is chosen at random and the remaining TX sources are treated as having the same capacity as the channels with a lower capacity;
- defining N-1=M status counters (Vᵢ), each associated with a corresponding source Cᵢ except for the source (Cₘₐₓ) with maximum capacity (Cₘₐₓ) ;
- defining N-1=M status variables (Sᵢ), each associated with a corresponding source Cᵢ except for the source (Cₘₐₓ) with maximum capacity (Cₘₐₓ) ; defining an "overflow value" OV = Cₘₐₓ;
- initializing the system at a time unit clock (CKU), setting:
   all the status counters Vᵢ to 0 and
   all the status variables Sᵢ to 1,
and continuing as follows:
taking account of the need for individual variations during the intervals of the transition clocks CKT so that the transition occurs at the next transition clock edge CKT:
   - at each transition clock CKT:
   - if there is a status variable Sᵢ which is equal to 1, the corresponding source Cᵢ is served, extracting a basic unit U_{J} of existing information, and it is inserted into the multiplexed flow being formed in the existing time unit;
   - Sᵢ is set to 0
   - if several variables Sᵢ are simultaneously equal to 1, a hierarchical rule for choice is defines, for example based on the increasing index values "i";
   - if all the status variables Sᵢ are equal to 0 the source with maximum capacity (Cₘₐₓ), which is not associated with any status variable Si, is served, extracting a basic unit U_{J} of information and inserting it in the multiplexed flow being formed in the existing time unit and each status counter Vᵢ is incremented by a value equal to its corresponding value cᵢ, obtaining a result R;
   - for each status counter Vᵢ which reaches, or exceeds, the overflow value OV = (Cₘₐₓ) :
   - the corresponding status variable Sᵢ is set to 1 and the calculated value VC=(Ri-Overflow) is entered in the counter Vᵢ;
   - at the next transition clock (CKT) the sequence is repeated, serving the existing source (Cᵢ), on the basis of the existing status variables Sᵢ;
   - if none of the status counters Vᵢ is in the overflow condition, at the next transition clock CKT the sequence is resumed, serving the existing source Cᵢ, on the basis of the existing status variables Sᵢ.

To summarise: at each transition clock edge one of the sources Cᵢ is served on the basis of the existing values of the status variables Sᵢ and the status counters Vᵢ (resulting from the updates performed during the interval defined by two successive clock edges) and the said variables are recalculated and updated in accordance with the above-defined rule; at the next clock the source Cᵢ will be served on the basis of the new values of the variables (Sᵢ, Vᵢ) and recalculation and updating of said variables will be repeated.

It has been operationally established that, with the method according to the invention, it is possible to obtain a flow of multiple data composed of blocks which are all structured in the same manner and each consisting of f=C₁+C₂+...+C_{N} basic units Uj supplied by the corresponding sources Cᵢ. In addition, the sequence with which the basic units of each source are inserted into the flow, for each time unit, respects the distribution over time of the said basic unit in the flow of its source Cᵢ.

This means that, the other system parameters being equal, each client will be served according to their own maximum capacity and so as to optimize the transmission latency and the variation in latency for each client compared to other clients and/or for the data blocks of each client.

### EXAMPLE 1

The method was tested by simulating three signal sources C₁,C₂,C₃ respectively:
C₁ with transmission capacity c₁=4,
C₂ with transmission capacity c₂=5,
C3 with transmission capacity c₃=9.
this will give N=3 and a bundling flow with capacity f=c₁+c₂+c₃=18 basic units Uj in the time unit T;
with M=N-1=3-1=2 th following variables are defined:
V₁: status counter for source 1
V₂ : status counter for source 2
S₁ : status variable for source 1
S₂ : status variable for source 2
Overflow = Cₘₐₓ = 9

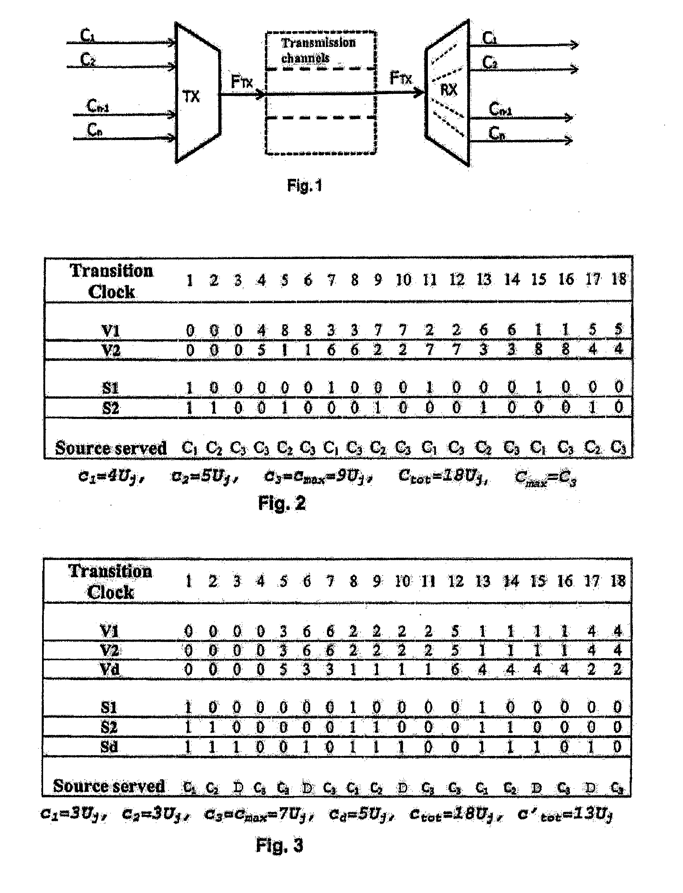

Figure 2 shows the table of values assumed by the status variables S₁, S₂, by the status counters V₁, V₂ and by the client Cᵢ served correspondingly at each transition clock.

According to the invention it is envisaged, moreover, that demultiplexing of the flows of multiplexed data received on the receiving side does not require knowledge of the signal structure in order to perform correct assignment of the various basic units to the associated receivers Ci; it is in fact sufficient for the receiver to know the same information used during transmission, namely:
- frequency of transition clock CKT;
- number N of Tx sources Cᵢ
- capacity cᵢ of each source Cᵢ;
in order to be able to apply correctly the same procedure used for transmission and serve the various receivers Cᵢ, extracting (instead of inserting) the basic units Uj from the transmitted flow being received and then distributing them to the appropriate receivers Cᵢ.

Since the maximum transmission capacity of each client may not be always be the same as its maximum possible value, i.e. may be reduced, owing to a reduction in the total transmission capacity of the transmission channels, the further following steps of the method according to the invention are envisaged:
- reducing the existing maximum capacity of each source so that the overall maximum capacity is still not greater than the existing maximum capacity of the transmission channel;
- defining a dummy channel (D) with a transmission capacity C_{d} equal to the difference between the overall maximum capacity f of the transmission channel and the reduced existing overall capacity f', i.e. C_{d} = f-f';
- using C_{d} dummy basic units of the dummy source D, for inserting into the flow of dummy basic units Ujd correspondingly at C_{d} transition clocks according to the general rule defined by the method.

In this way the total apparent capacity of the multiplexed flow to be transmitted remains unvaried and both the transition clock CKT and the time unit clock CKU may be kept unvaried, favouring simplification of the circuit design.

During reception it will be sufficient not to perform any extraction from the frame at the C_{d} clocks of the dummy source D, while continuing to update the variables and the status counters according to the general rule defined by the method.

In the event of cancellation - including temporary cancellation - of a client, it may be treated as a particular instance of reduction of the transmission capacity, creating a further dummy client.

### EXAMPLE 2

With reference to Example 1 it can be imagined that the capacities of the three TX sources may change from c₁=4 c₂=5, c₃=9 to respective new lower values, for example c₁=3 c₂=3, c₃=7; in this case, since f'=c₁+c₂+c₃=13, the dummy source D with capacity C_{d} equal to (f=18)-(f'=13) = 5 is created. In this way the apparent overall length of the frame is always 18.

This dummy source D is used within the method exactly in the same way as a real source and therefore reserving c_{d} empty basic units within the frame according to its capacity c_{d}=5.

During reception, at the corresponding c_{d} transition clock edges, extraction of basic units will not be performed but the values of the variables and the status counters will be updated according to the general rule.

It is therefore clear how, with the multiplexing and demultiplexing method according to the invention, it is possible to acquire the digital signals from different TX sources and bundle them together in a single digital flow being transmitted so that:
- only the same small amount of transmission and reception information is required for performing the bundling operation and distribution operation, respectively;
- it is not required to define tables with the frame structure and exchange them between transmitting station and receiving station;
- transmission/reception is transparent with respect to the contents of the flows generated by the sources and therefore their internal structure and the protocols used;
- any (temporary) variations in the capacity of any source are managed in a simple manner without the need for modification of the transition clock or the modes with which the frames are structured;
- the transmission latency is optimised overall and all the clients are treated equally;
- the variations in latency between the various blocks of a same source are minimised, all the other system parameters being equal.

From the example illustrated it can be seen how, at about one third of the time unit T (column 6 in the Table of Fig. 2), i.e. after about six transition clocks CKT, all the sources Cᵢ have transmitted about one third of the respective information to be transmitted.

It is also clear that the formation of a single multiplexed flow by means of the method described above may be effectively used both by single-channel servers and multiple-channel servers with a given total maximum capacity.

Although described in connection with certain constructional forms and certain preferred examples of embodiment of the invention, it is understood that the scope of protection of the present patent is defined solely by the following claims.

## Claims

1. Method for multiplexing digital data from a plurality of sources (Cᵢ) with an assigned nominal capacity (Cᵢ), **characterized in that** it comprises the following steps:
- identifying the source (Cₘₐₓ) with greatest nominal capacity (Cₘₐₓ);
- identifying a time unit (T) and a time unit clock (CKU);
- defining a transition clock (CKT);
- defining N-1=M status counters (Vᵢ), each associated with a corresponding source (Cᵢ) except for the source (Cₘₐₓ) with greatest nominal capacity (Cₘₐₓ);
- defining N-1=M status variables (Sᵢ) each associated with a corresponding source (Cᵢ) except for the source (Cₘₐₓ) with greatest nominal capacity (Cₘₐₓ);
- defining an overflow value OV, equal to said greatest nominal capacity (Cₘₐₓ) of the source (Cₘₐₓ) with greatest nominal capacity (OV = (cₘₐₓ) ;
- initializing the system, setting:
all the status counters (Vᵢ) to 0 and
all the status variables (Sᵢ) to 1,
- at each transition clock (CKT):
- if a status variable (Sᵢ) is equal to 1 the corresponding source (Cᵢ) is served, extracting a basic unit (Uj) of existing information and inserting it into the multiplexed flow (F) being formed:
- the status variable (Sᵢ) is set to 0;
- if several status variables (Sᵢ) are simultaneously equal to 1, the source is chosen on the basis of a predefined hierarchy;
- if all the status variables (Sᵢ) are equal to 0 the source (Cₘₐₓ) with greatest nominal capacity is served, extracting a basic unit (Uj) of existing information originating from the source (Cₘₐₓ), and inserting it into the multiplexed flow (F) being formed;
- each status counter (Vᵢ) is incremented by a value equal to its corresponding nominal capacity (cᵢ), obtaining a result Rᵢ;
- for each status counter (Vᵢ) which reaches, or exceeds, the overflow value (OV = Cₘₐₓ), the corresponding status variable (Sᵢ) is set to 1 and
- the status counter (Vᵢ) is forced to the value VC= Rᵢ-OV;
- at the next transition clock (CKT) the sequence is repeated serving the current source (Cᵢ), on the basis of the current status variables (Sᵢ);
- if no status counter (Vᵢ) is in overflow, at the next transition clock (CKT) the sequence is resumed, serving the current source (Cᵢ), on the basis of the current status variables (Sᵢ).

2. Method according to Claim 1, **characterized in that**, in the event of several sources (Cᵢ) with the same maximum capacity, the source to be used as source with maximum capacity (Cₘₐₓ) is chosen at random and the remaining sources are treated as having the same capacity as those with less capacity.

3. Method according to Claim 1, **characterized in that** the hierarchy for choice from among several sources (Cᵢ) if several status variables (Sᵢ) are simultaneously equal to 1 is based on the increasing values of the indices "i".

4. Method according to Claim 1, **characterized in that** the transmission capacity of each source (Cᵢ) is not equal to its maximum possible value.

5. Method according to Claim 4, **characterized in that** it comprises the following further steps:
- defining a dummy client (D) with a transmission capacity C_{d} equal to the difference between the nominal total capacity (f) of the sources (Cᵢ) and the existing total capacity (f'), reduced (C_{d}=f-f');
- extracting C_{d} dummy basic units (Uj_{d}), of the dummy source (D), corresponding to C_{d} transition clocks;
- inserting said C_{d} dummy basic units (Uj_{d}) into the flow, in accordance with the method according to Claim 1.

6. Method for multiplexing and demultiplexing comprising the method for multiplexing according to Claim 1, **characterized in that** demultiplexing during reception of the multiplexed data flows with assignment of the various basic units (Uj) to the various receivers (Cᵢ) uses the following parameters equal to the multiplexing parameters:
- frequency of transition clock (CKT);
- number N of the sources (Cᵢ)
- capacity (Cᵢ) of each source (Cᵢ);
used for multiplexing,
and application of the method with
updating of the values of the variables (Sᵢ) and the status counters (Vᵢ) according to Claim 1,
extraction of the basic units (Uj) from the incoming multiplexed flow being received, and distribution thereof among the appropriate receivers (Cᵢ).

7. Method according to Claim 6, **characterized in that** at the C_{d} transition clock edges for the C_{d} dummy basic units (Uj_{d}) of the dummy source (D), no extraction of basic units is performed.

8. Method for the transmission of digital data from a plurality sources (Cᵢ) with nominal capacity (Cᵢ), on a transmission channel with a nominal assigned capacity not greater than the total nominal capacity of the sources, **characterized in that** it comprises the method for multiplexing according to Claim 1.

9. Method according to Claim 8, **characterized in that** it comprises the method for multiplexing and demultiplexing according to Claim 6.

10. Method for the transmission of digital data from a plurality of sources (Cᵢ) with nominal capacity (cᵢ), on at least two transmission channels with an assigned nominal capacity not greater than the total nominal capacity of the sources, comprising a step involving multiplexing in a single flow the basic units (Uj) of the data from the different sources (Cᵢ), **characterized in that** it comprises the method for multiplexing according to Claim 1.

11. Method according to Claim 10, **characterized in that** it comprises the method for multiplexing and demultiplexing according to Claim 6.

## Patentansprüche

1. Verfahren zum Multiplexen digitaler Daten aus einer Vielzahl von Quellen (Cᵢ) mit einer zugeordneten Nennkapazität (ci), **dadurch gekennzeichnet, dass** es die folgenden Schritte umfasst:
- Identifizieren der Quelle (cₘₐₓ) mit der größten Nennkapazität (cₘₐₓ);
- Identifizieren einer Zeiteinheit (T) und eines Zeiteinheitstakts (CKU);
- Definieren eines Übergangstakts (CKT);
- Definieren von N-1=M Status-Zählern (Vᵢ) die jeweils einer entsprechenden Quelle Cᵢ zugehörig sind, außer für die Quelle (cₘₐₓ) mit der größten Nennkapazität (cₘₐₓ);
- Definieren von N-1=M Status-Variablen (Sᵢ), die jeweils mit einer entsprechenden Quelle Cᵢ zusammenhängen, außer für die Quelle (cₘₐₓ) mit der größten Nennkapazität (cₘₐₓ);
- Definieren eines "Überlauf-Wertes" OV, der gleich der größten Nennkapazität (cₘₐₓ) der Quelle (Cₘₐₓ₎ mit der größten Nennkapazität (OV = cₘₐₓ) ist;
- Initialisieren des Systems, wobei folgendes eingestellt wird:
- alle Status-Zähler (Vᵢ) auf 0 und
- alle Status-Variablen (Sᵢ) auf 1,
- bei jedem Übergangstakt (CKT):
- wenn eine Status-Variable Sᵢ gleich 1 ist, wird die entsprechende Quelle Cᵢ bedient, wobei eine Basiseinheit (Uⱼ) der bestehenden Information extrahiert und sie in den gemultiplexten Strom (F) eingespeist, der gebildet wird:
- die Status-Variable (Sᵢ) wird auf 0 gesetzt;
- wenn mehrere Status-Variablen (Sᵢ) gleichzeitig gleich 1 sind, wird die Quelle auf der Grundlage einer vordefinierten Hierarchie gewählt;
- wenn alle Status-Variablen (Sᵢ) gleich 0 sind, wird die Quelle mit der größten Nennkapazität bedient, wobei eine Basiseinheit (Uⱼ) von bestehenden aus der Quelle (Cₘₐₓ) stammenden Informationen extrahiert und sie in den gemultiplexten Strom (F), der gebildet wird, eingespeist wird,
- jeder Status-Zähler Vᵢ wird durch einen Wert inkrementiert, der gleich seinem entsprechenden Wert (cᵢ) ist, wobei ein Ergebnis Rᵢ erhalten wird;
- für jeden Status-Zähler (Vᵢ), der den Überlaufwert (OV = cₘₐₓ) erreicht oder übersteigt, wird die entsprechende Status-Variable (Sᵢ) auf 1 eingestellt und
- der Status-Zähler (Vᵢ) wird auf den Wert VC = Rᵢ-OV zurückgedrängt;
- beim nächsten Übergangstakt (CKT) wird die Sequenz, die die aktuelle Quelle (Cᵢ) bedient, auf der Grundlage der aktuellen Status-Variablen Sᵢ wiederholt;
- wenn keine Status-Zähler (Vᵢ) im Überlaufzustand ist, wird beim nächsten Übergangstakt (CKT) die Sequenz wieder aufgenommen, wobei die aktuelle Quelle (Cᵢ) auf der Grundlage der aktuellen Status-Variablen (Sᵢ) bedient wird.

2. Verfahren nach Anspruch 1, **dadurch gekennzeichnet, dass** in dem Fall von mehreren Quellen (Cᵢ) mit der gleichen maximalen Kapazität (Cₘₐₓ) die als Quelle mit der maximalen Kapazität (Cₘₐₓ) zu verwendende Quelle nach dem Zufallsprinzip gewählt wird und die restlichen Quellen so behandelt werden, als ob sie die gleich Kapazität haben wie diejenigen mit der geringeren Kapazität.

3. Verfahren nach Anspruch 1, **dadurch gekennzeichnet, dass** die Hierarchie zur Wahl unter mehreren Quellen (Cᵢ), wenn mehrere Status-Variable (Si) gleichzeitig gleich 1 sind, auf den zunehmenden Werten der Indices "i" beruht.

4. Verfahren nach Anspruch 1, **dadurch gekennzeichnet, dass** die Übertragungskapazität von jeder Quelle (Cᵢ) nicht gleich ihrem maximal möglichen Wert ist.

5. Verfahren nach Anspruch 4, **dadurch gekennzeichnet, dass** es die folgenden weiteren Schritte umfasst:
- Definieren eines Dummy-Clients (D) mit einer Übertragungskapazität c_{d}, die gleich der Differenz ist zwischen der gesamten maximalen Kapazität (f) der Quellen (Cᵢ) und der bestehenden gesamten Kapazität (f), kurz f - f, ist;
- Extrahieren von c_{d} Dummy-Basiseinheiten (U_{jd}) von der Dummy-Quelle (D), entsprechend c_{d}-Übergangstakten;
- Einspeisung in den Strom der c_{d} Dummy-Basiseinheiten (U_{jd}) gemäß dem Verfahren nach Anspruch 1.

6. Verfahren zum Multiplexen und Demultiplexen umfassend das Verfahren zum Multiplexen nach Anspruch 1, **dadurch gekennzeichnet, dass** das Demultiplexen während des Empfangs der gemultiplexten Datenströme mit der Zuordnung der verschiedenen Basiseinheiten (Uⱼ) zu den verschiedenen Empfängern (Cᵢ) die folgenden den Multiplexing-Parametern entsprechenden Parameter verwendet:
- Frequenz von Übertragungstakt (CKT),
- Anzahl N der Quellen (Cᵢ),
- Kapazität (cᵢ) von jeder Quelle (Cᵢ);
die zum Multiplexen verwendet werden,
und Anwendung des Verfahrens mit
Aktualisieren der Werte der Variablen (Sᵢ) und der Status-Zähler (Vᵢ) nach Anspruch 1, Extraktion der Basiseinheiten (Uⱼ) aus dem einströmenden gemultiplexten Strom, der empfangen wird, und
Verteilung davon unter den entsprechenden Empfängern (Ci).

7. Verfahren nach Anspruch 6, **dadurch gekennzeichnet, dass** an den Übergangstakträndern für die c_{d} Dummy-Basiseinheiten (U_{jd}) der Dummy-Quelle (D) keine Extraktion der Basiseinheiten vorgenommen wird.

8. Verfahren zur Übertragung von digitalen Daten aus einer Vielzahl von Quellen (Ci) mit Nennkapazität (ci) auf einem Übertragungskanal mit einer zugeordneten Nennkapazität, die nicht größer ist als die gesamte Nennkapazität der Quellen, **dadurch gekennzeichnet, dass** es das Verfahren zum Multiplexen nach Anspruch 1 umfasst.

9. Verfahren nach Anspruch 8, **dadurch gekennzeichnet, dass** es das Verfahren zum Multiplexen und Demultiplexen nach Anspruch 6 umfasst.

10. Verfahren zur Übertragung von digitalen Daten aus einer Vielzahl von Quellen (Cᵢ) mit Nennkapazität (cᵢ) auf mindestens zwei Übertragungskanälen mit einer zugeordneten Nennkapazität, die nicht größer ist als die gesamte Nennkapazität der Quellen, umfassend einen Schritt, der das Multiplexen in einem einzigen Strom der Basiseinheiten (Uj) der Daten aus den verschiedenen Quellen (Ci) umfasst, **dadurch gekennzeichnet, dass** es das Verfahren zum Multiplexen nach Anspruch 1 umfasst.

11. Verfahren nach Anspruch 10, **dadurch gekennzeichnet, dass** es das Verfahren zum Multiplexen und Demultiplexen nach Anspruch 6 umfasst.

## Revendications

1. Procédé de multiplexage de données numériques provenant de plusieurs sources (Cᵢ) de capacité nominale affectée (cᵢ), **caractérisé en ce qu'**il comprend les étapes suivantes consistant à :
- identifier la source (Cₘₐₓ) ayant la capacité nominale la plus grande (cₘₐₓ) ;
- identifier une unité de temps (T) et une horloge d'unité de temps (CKU) ;
- définir une horloge de transition (CKT) ;
- définir N - 1 = M compteurs d'état (Vᵢ), chacun étant associé à une source correspondante (Ci) à l'exception de la source (Cₘₐₓ) ayant la capacité nominale la plus grande (cₘₐₓ) ;
- définir N - 1 = M variables d'état (Sᵢ) chacune étant associée à une source correspondante (Ci) à l'exception de la source (Cₘₐₓ) ayant la capacité nominale la plus grande (cₘₐₓ) ;
- définir une valeur de dépassement de capacité OV, égale à ladite capacité nominale la plus grande (cₘₐₓ) de la source (Cₘₐₓ) ayant la capacité nominale la plus grande (OV = cₘₐₓ) ;
- initialiser le système, en instaurant :
tous les compteurs d'état (Vᵢ) à 0, et
toutes les variables d'état (Sᵢ) à 1,
- à chaque horloge de transition (CKT) :
- si une variable d'état (Sᵢ) est égale à 1, la source correspondante (Cᵢ) est desservie, en extrayant l'unité de base (Uj) d'informations existantes et en l'insérant dans le flux multiplexé (F) en cours de formation :
- la variable d'état (Sᵢ) est instaurée à 0 ;
- si plusieurs variables d'état (Sᵢ) sont simultanément égales à 1, la source est choisie sur la base d'une hiérarchie prédéfinie ;
- si toutes les variables d'état (Sᵢ) sont égales à 0, la source (Cₘₐₓ) ayant la capacité nominale la plus grande est desservie, en extrayant une unité de base (Uj) d'informations existantes provenant de la source (Cₘₐₓ) et en l'insérant dans le flux multiplexé (F) en cours de formation ;
- chaque compteur d'état (Vᵢ) est incrémenté d'une valeur égale à sa capacité nominale correspondante (cᵢ), en obtenant un résultat Rᵢ ;
- pour chaque compteur d'état (Vᵢ) qui atteint ou dépasse la valeur de dépassement de capacité (OV = cₘₐₓ), la variable d'état correspondante (Sᵢ) est instaurée à 1, et
- le compteur d'état (Vᵢ) est forcé à la valeur VC = Rᵢ - OV ;
- à l'horloge de transition suivante (CKT), la séquence est répétée en desservant la source (Cᵢ), sur la base des variables d'état courantes (Sᵢ) ;
- si aucun compteur d'état (Vᵢ) n'est en dépassement de capacité, à l'horloge de transition suivante (CKT), la séquence reprend, en desservant la source courante (Cᵢ) sur la base des variables d'état courantes (Sᵢ).

2. Procédé selon la revendication 1, **caractérisé en ce que**, dans le cas de plusieurs sources (Cᵢ) ayant la même capacité maximale, la source devant être utilisée, en tant que source ayant une capacité maximale (Cₘₐₓ), est choisie de manière aléatoire et les sources restantes sont traitées comme ayant la même capacité que celles ayant une capacité inférieure.

3. Procédé selon la revendication 1, **caractérisé en ce que** la hiérarchie de choix parmi plusieurs sources (Cᵢ), si plusieurs variables d'état (Sᵢ) sont simultanément égales à 1, est basée sur les valeurs croissantes des indices « i ».

4. Procédé selon la revendication 1, **caractérisé en ce que** la capacité de transmission de chaque source (Cᵢ) n'est pas égale à sa valeur maximale possible.

5. Procédé selon la revendication 4, **caractérisé en ce qu'**il comprend les étapes suivantes consistant en outre à :
- définir un client fictif (D) ayant une capacité de transmission réduite c_{d} égale à la différence entre la capacité nominale totale (f) des sources (Cᵢ) et la capacité totale existante (f'), (c_{d} = f - f') ;
- extraire c_{d} unités de base fictives (Uj_{d}) de la source fictive (D) correspondant à c_{d} horloges de transition ;
- introduire lesdites c_{d} unités de base fictives (Uj_{d}) dans le flux, conformément au procédé selon la revendication 1.

6. Procédé de multiplexage et de démultiplexage comprenant le procédé de multiplexage selon la revendication 1, **caractérisé en ce que** le démultiplexage, pendant la réception des flux de données multiplexées avec affectation des diverses unités de base (Uj) aux divers récepteurs (Cᵢ), utilise les paramètres suivants égaux aux paramètres de multiplexage :
- une fréquence d'horloge de transition (CKT) ;
- un nombre N des sources (Cᵢ)
- la capacité (cᵢ) de chaque source (Cᵢ) ;
utilisés pour le multiplexage,
et une application du procédé avec une mise à jour des valeurs des variables (Sᵢ) et des compteurs d'état (Vᵢ) selon la revendication 1,
l'extraction des unités de base (Uj) du flux multiplexé entrant en cours de réception, et sa distribution entre les récepteurs appropriés (Cᵢ).

7. Procédé selon la revendication 6, **caractérisé en ce que**, au niveau des c_{d} flancs des horloges de transition des c_{d} unités de base fictives (Uj_{d}) de la source fictive (D), aucune extraction d'unité de base n'est effectuée.

8. Procédé pour la transmission de données numériques provenant de plusieurs sources (Cᵢ) de capacité nominale (cᵢ), sur un canal de transmission ayant une capacité nominale affectée qui n'est pas supérieure à la capacité nominale totale des sources, **caractérisé en ce qu'**il comprend le procédé de multiplexage selon la revendication 1.

9. Procédé selon la revendication 8, **caractérisé en ce qu'**il comprend le procédé de multiplexage et de démultiplexage selon la revendication 6.

10. Procédé pour la transmission de données numériques provenant de plusieurs sources (Cᵢ) de capacité nominale (cᵢ), sur au moins deux canaux de transmission ayant une capacité nominale affectée qui n'est pas supérieure à la capacité nominale totale des sources, comprenant une étape impliquant le multiplexage en un seul flux des unités de base (Uj) des données provenant des différentes sources (Cᵢ), **caractérisé en ce qu'**il comprend le procédé de multiplexage selon la revendication 1.

11. Procédé selon la revendication 10, **caractérisé en ce qu'**il comprend le procédé de multiplexage et de démultiplexage selon la revendication 6.
